Europäisches Patentamt

European Patent Office

Office européen des brevets

(11) Veröffentlichungsnummer: **0 402 491**
**A1**

(12) **EUROPÄISCHE PATENTANMELDUNG**

(21) Anmeldenummer: 89110599.1

(22) Anmeldetag: **12.06.89**

(51) Int. Cl.⁵: **B65H 3/06, B65H 3/24,**
**B65H 1/00, G03B 42/04**

(43) Veröffentlichungstag der Anmeldung:
**19.12.90 Patentblatt 90/51**

(84) Benannte Vertragsstaaten:
**DE FR GB IT NL SE**

(71) Anmelder: **Siemens Elema AB**
**Röntgenvägen 2**
**S-171 95 Solna 1(SE)**

(84) **SE**

Anmelder: **Siemens Aktiengesellschaft**
**Wittelsbacherplatz 2**
**D-8000 München 2(DE)**

(84) **DE FR GB IT NL**

(72) Erfinder: **Wärve, Hans**
**Skoldalsvägen 19**
**S-191 51 Sollentuna(SE)**

(54) **Vorrichtung zum Trennen von einzelnen, zu einem Stapel zusammengefassten Blättern.**

(57) Vorrichtung (2), mit mindestens einem Transportrad (19, 20), das um eine Achse (17, 18) entgegen der Auslaufrichtung der Blätter (83), insbesondere Röntgenfilmblätter bei Röntgeneinrichtungen, antreibbar ist. Die Achse ist annähernd senkrecht zum Stapel verschiebbar gelagert, so daß das Transportrad auf der Oberfläche eines obersten Blattes des Stapels auflegbar ist. Damit bei einer hohen Filmtransportfrequenz ein einwandfreier Filmtransport auch bei einem verhältnismäßig einfachen Aufbau der Vorrichtung gewährleistet ist, wird das Transportrad nach einer Drehung um einen Winkel α, der einer vorgebbaren Transportstrecke des Blattes entspricht, von diesem abgehoben.

FIG 1

EP 0 402 491 A1

## Vorrichtung zum Trennen von einzelnen, zu einem Stapel zusammengefassten Blättern

Die Erfindung betrifft eine Vorrichtung zum Trennen von einzelnen, zu einem Stapel zusammengefassten Blättern, insbesondere Röntgenfilmblättern bei Röntgeneinrichtungen, mit mindestens einem Transportrad, das um eine Achse entgegen der Auslaufrichtung der Blätter antreibbar ist, wobei die Achse annähernd senkrecht zum Stapel verschiebbar gelagert ist, und das auf die Oberfläche eines obersten Blattes des Stapels auflegbar ist.

Eine Vorrichtung dieser Art, die bei einem Röntgenfilmmagazin für einen Röntgenfilmwechsler vorgesehen ist, ist in der US-PS 4,541,625 beschrieben. Ein bekanntes Problem bei Röntgenfilmwechslern ist, die im Röntgenfilmmagazin gestapelten Röntgenfilmblätter derart voneinander zu trennen, daß immer nur ein Filmblatt zum Belichtungsfeld des Filmwechslers transportiert wird; mehrere Blätter gleichzeitig würden eine Aufnahme unmöglich machen. In der US-PS 4,541,625 soll dies erreicht werden, indem das jeweils oberste Filmblatt im Stapel mittels Transporträder zunächst entgegen der Auslaufrichtung in eine Spalte hineintransportiert wird, die lediglich jeweils ein Blatt aufnehmen kann. Danach wird dieses Filmblatt durch dieselben Transporträder, die nun in entgegengesetzter Richtung angetrieben werden, aus dem Filmmagazin hinaus und in eine Aufnahmeeinheit des Filmwechslers hineintransportiert. Durch die Verwendung derselben Räder für beide Transportrichtungen ist, insbesondere bei einer Filmtransportfrequenz von 3 bis 4 Filmblättern per Sekunde, die zeitliche Aufeinanderfolge des Filmtransportes unsicher. Ferner ist ein hoher Verschleiß sowohl der Räder als auch des Getriebes gegeben.

In einem weiteren, in der US-PS 4,541,625 dargestellten Ausführungsbeispiel eines Röntgenfilmmagazines werden statt Transportrollen Klötze verwendet, die mit Schaumgummi und Nadeln versehen sind. Der Schaumgummi und die Nadeln der Klötze werden auf das jeweils oberste Filmblatt des Filmstapels gedrückt und verschieben dieses Filmblatt entgegen der Auslaufrichtung. Danach werden die Klötze vom Filmblatt abgehoben, so daß eine weitere Anordnung das Filmblatt aus dem Röntgenfilmmagazin heraustransportieren kann. Durch den Bewegungsablauf der Klötze ist eine in dem Aufbau komplizierte Konstruktion erforderlich, was das Röntgenfilmmagazin insgesamt teuer macht.

Der Erfindung liegt die Aufgabe zugrunde, eine Vorrichtung der eingangs genannten Art zu schaffen, bei der bei einer hohen Filmtransportfrequenz ein einwandfreier filmtransport gewährleistet ist. Ferner soll die Vorrichtung einen verhältnismäßig einfachen Aufbau aufweisen.

Diese Aufgabe ist erfindungsgemäß dadurch gelöst, daß das Transportrad nach einer Drehung um einen Winkel α, der einer vorgebbaren Transportstrecke des Blattes entspricht, von diesem abgehoben wird. Hierdurch wird ermöglicht, daß das Transportrad lediglich in die eine Transportrichtung der Röntgenfilmblätter gedreht wird. Das jeweils oberste Röntgenfilmblatt eines Stapels wird, nachdem das Transportrad von deren Oberfläche hochgehoben wird, mittels einer weiteren Vorrichtung aus dem Röntgenfilmmagazin heraustransportiert. So ist auch bei einer hohen Filmtransportfrequenz der zeitgerechte Filmtransport sicher gegeben gleichzeitig damit, daß sowohl Transportrad als auch Getriebe eine lange Lebensdauer aufweisen.

In einer vorteilhaften Ausbildung der Vorrichtung wird vorgeschlagen, daß zum Abheben des Transportrades eine Rolle vorgesehen ist, die an einem Hebelarm befestigt ist, der über die gleiche Achse schwenkbar ist, um die das Transportrad gedreht wird, daß die Schwenkung des Hebelarmes und die Drehung des Transportrades um die Achse so aufeinander abgestimmt sind, daß nach der Drehung des Transportrades um den Winkel α die Rolle auf der Oberfläche des obersten Blattes des Stapels anliegt und daß der Abstand von der Achse bis zum Ende der Rolle größer ist als der Radius des Transportrades. Dadurch ist ein verhältnismäßig einfacher Aufbau der Vorrichtung gegeben.

Eine vorteilhafte Weiterbildung der Erfindung ergibt sich daraus, daß die Achse des Transportrades an einem Hebel gelagert ist, der um eine weitere Achse schwenkbar ist. Dadurch ist erreicht, daß das Transportrad beim Laden der Röntgenfilmblätter in einfacher Weise von der Bodenfläche des Filmmagazines abgehoben werden kann.

Im Hinblick auf eine weitere konstruktive Ausgestaltung der Erfindung empfiehlt es sich, dass das Transportrad in abgehobener Lage arretierbar ist.

Eine besonders günstige Ausgestaltung erhält man dadurch, daß das Transportrad derart federbelastet ist, daß eine Kraft in Richtung auf den Stapel auf dieses ausgeübt wird. Dadurch ist erreicht, daß eine gute Friktion zwischen Transportrad und dem jeweils obersten Blatt des Stapels erhalten wird, so daß immer ein schlupffreier Transport des Filmblattes gegeben ist.

In einer vorteilhaften Weiterbildung der Erfindung wird vorgeschlagen, daß als Transportrad ein Zahnrad vorgesehen ist.

Die Erfindung ist nachfolgend anhand eines in den Zeichnungen dargestellten Ausführungsbeispiels näher erläutert. Es zeigen:

FIG 1 eine perspektivische Ansicht eines Röntgenfilmmagazines mit einer Vereinzelungsvorrichtung für Filmblätter nach der Erfindung;

FIG 2 eine Seitenansicht des Röntgenfilmmagazines nach FIG 1;

FIG 3 eine Seitenansicht eines Vereinzelungsteiles des Röntgenfilmmagazines nach den FIG 1 und 2;

FIG 4 eine perspektivische Ansicht des Röntgenfilmmagazines nach den FIG 1 und 2 mit einer Entnahmevorrichtung für Filmblätter;

FIG 5, 6 Draufsichten der Entnahmevorrichtung nach FIG 4 und

FIG 7 eine Seitenansicht eines Deckels für das Röntgenfilmmagazin nach FIG 1, 2 und 4.

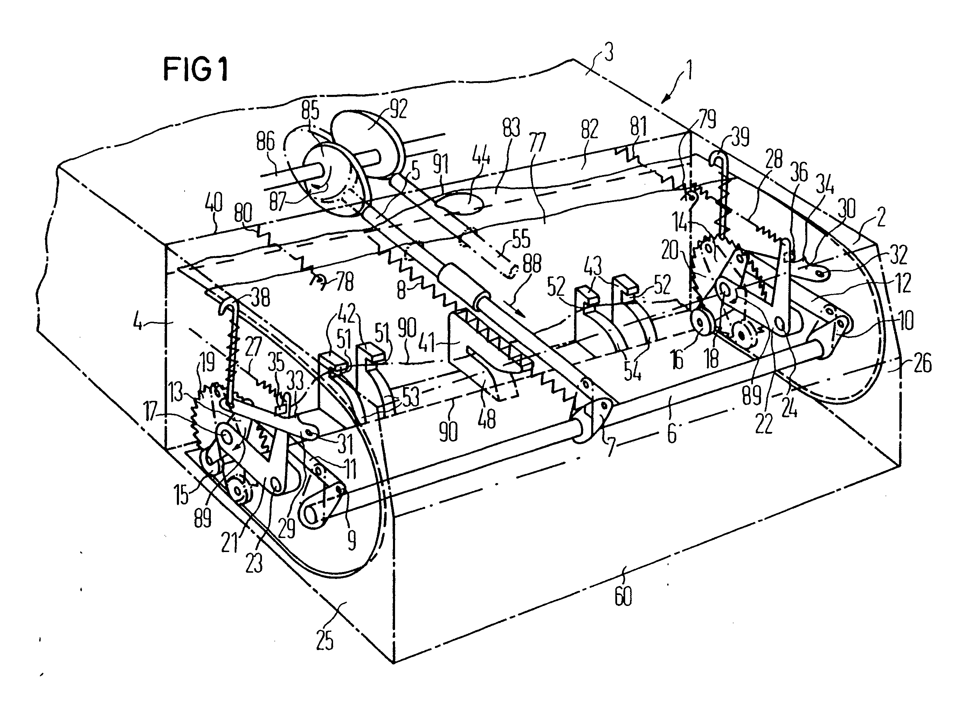

In der FIG 1 ist ein Teil eines Röntgenfilmwechslers (1) gezeigt mit einem Röntgenfilmmagazin (2), das an eine Aufnahmeeinheit (3) angeschlossen ist. Das Röntgenfilmmagazin (2) ist derart ausgebildet, daß Röntgenfilmblätter in diesem C-förmig gelagert werden. Das Röntgenfilmmagazin (2) weist eine Vereinzelungsvorrichtung auf, die mit einer Stange (5) versehen ist, welche durch die Wandung (4) zwischen Röntgenfilmmagazin (2) und Aufnahmeeinheit (3) hindurchragt. Die Stange (5) ist an einem Ende über einen Verbindungsarm (7) gelenkig mit einer Welle (6) verbunden, die quer zur Längsrichtung der Stange (5) angeordnet ist. Der Verbindungsarm (7) und die Welle (6) sind starr miteinander verbunden. Zwischen dem Verbindungsarm (7) und der Wandung (4) ist eine Zugfeder (8) angebracht. Die Welle (6) weist ferner an beiden Enden jeweils einen weiteren Verbindungsarm (9,10) auf, der über eine Anordnung, bestehend aus Stange (11;12) und Hebelarm (13;14) mit einer Rolle (15;16) verbunden ist. Die Hebelarme (13,14) sind um Achsen (17,18) schwenkbar gelagert. Außerdem sind um dieselben Achsen (17,18) drehbare Zahnräder (19,20) angeordnet. Die Hebelarme (13,14) sind derart dimensioniert, daß der Abstand von den Achsen (17,18) bis zum Ende der Rollen (15,16) größer ist als der Radius der Transporträder (19,20). Die Rollen (15,16) ragen somit geringfügig über die Zahnräder (19,20) hinaus, so daß die Rollen (15,16) bei einer bestimmten Lage der Hebelarme (13,14) die Zahnräder (19,20) von ihren Auflageflächen abheben. Die Achsen (17,18) der Zahnräder (19,20) sind ferner jeweils an einen winkelförmigen Hebel (21,22) gelagert. Die Hebel (21,22) sind um weitere Achsen (23,24), die in den stirnseitigen Wandungen (25,26) des Röntgenfilmmagazines (2) befestigt sind, schwenkbar gelagert. Das freie Ende jedes Hebels (21,22) ist über Zugfedern (27,28) mit der Wandung (4) des Röntgenfilmmagazines (2) verbunden. Das Röntgenfilmmagazin (2) beinhaltet darüberhinaus ein Vereinzelungsteil (41) für die Röntgenfilmblätter und auf jeder Seite des Vereinzelungsteiles (41) jeweils zwei dicht nebeneinander angeordnete Gleitklötze (42,43). Das Vereinzelungsteil (41) und die Gleitklötze (42,43) werden später näher beschrieben.

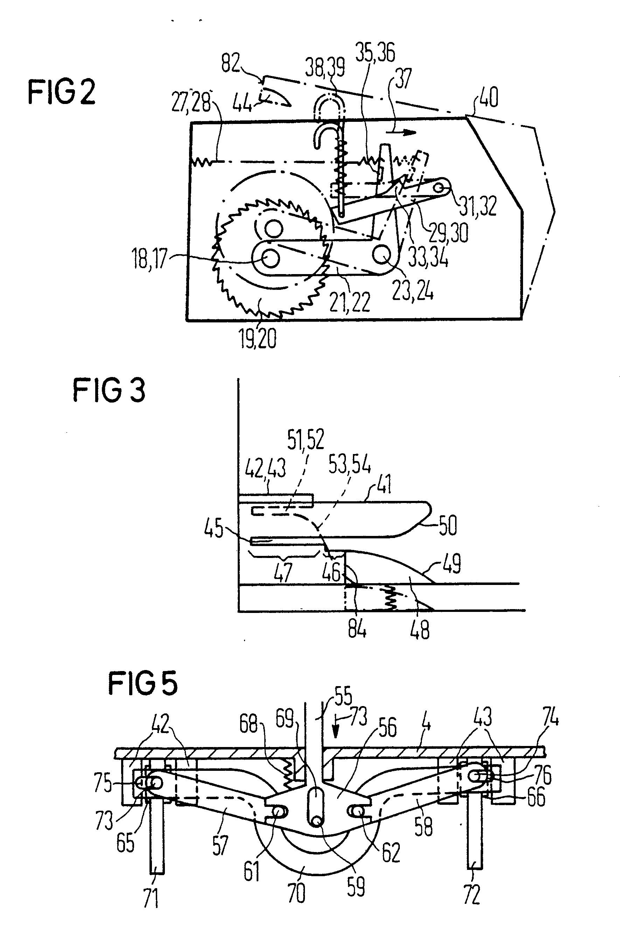

In der FIG 2 ist dargestellt, daß die Zahnräder (19,2o) durch Drehen der Hebel (21,22) um die Achsen (23,24) nach oben geschwenkt werden können. Die Hebel (21,22) sind in ihren oberen, hier punktgestrichelt dargestellten Lagen durch Schloßbleche (29,30) arretierbar. Dies erfolgt, indem die Schloßbleche (29,30), die um Wellen (31,32) drehbar gelagert sind, Anschläge (33,34) aufweisen, in denen eine jedem Hebel (21,22) zugeordnete vorstehende platte (35,36) beim Ziehen der federbelasteten Hebel (21,22) in Richtung des Pfeiles (37) einrastet. An dem freien Ende jedes Schloßbleches (29,30) ist ein federbelasteter Stift (38,39) befestigt, der über die Wandungen (25,26) des Röntgenfilmmagazines (2) hinausragt, wenn das Schloßblech (29,30) sich in eine Einrastlage - strichpunktiert gezeigt - für den Hebel (21,22) befindet.

In der Figur ist ferner ein Deckel (40) für das Röntgenfilmmagazin (2) in offener Lage gezeigt. Beim Schließen des Deckels (40) werden die federbelasteten Stifte (38,39) heruntergedrückt. Gleichzeitig werden die Schloßbleche (29,30) derart um ihre Achsen (31,32) geschwenkt, daß die Anschläge (33,34) von den Platten (35,36) der Hebel (21,22) ausrasten, wobei die Zahnräder (19,20) in ihre ursprünglichen Lagen zurückschnappen.

Der Deckel (40) weist außerdem einen Haltekeil (44) auf. Wenn der Deckel (40) geschlossen ist, ragt der Haltekeil (44) in das Röntgenfilmmagazin (2) hinein. In dieser FIG 2 ist anschaulichkeitshalber lediglich die Schwenkung der Zahnräder (19,20) bzw. der winkelförmigen Hebel (21,22) sowie deren Arretierung dargestellt.

Aus der FIG 3 ist ersichtlich, daß das Vereinzelungsteil (41) einen Spalt (45) aufweist, dessen Tiefe in zwei unterschiedlich ausgebildete Strecken (46,47) unterteilt ist. Der Spalt (45) weist auf der Strecke (46) eine lichte Höhe auf, die geringfügig größer ist als die Stärke zweier Röntgenfilmblätter. Die lichte Höhe des Spaltes (45) auf der Strecke (47) entspricht der Starke eines einzigen Röntgenfilmblattes.

Als Verlängerung des Spaltes (45) ist ein keilförmiges Gleitstück (48) vorgesehen, das federnd bis zur Bodenplatte (60) heruntergedrückt werden kann. Das Gleitstück (48) weist eine Gleitfläche (49) für die Röntgenfilmblätter auf. Dieser gegenüber befindet sich eine weitere Gleitfläche (50) für die Röntgenfilmblätter. In dieser Figur ist ferner einer der Gleitklötze (42,43), z.B. der Gleitklotz (43) dargestellt. Die Gleitklötze (42,43) weisen Spalte (51,52) auf, die im Verhältnis zum Spalt (45) des Vereinzelungsteiles (41) von der Bodenplatte (60) des Röntgenfilmmagazines (2) gemessen höher angebracht sind. Die Gleitklötze (42,43) besitzen außerdem Gleitflächen (53,54) für die Röntgenfilmblätter.

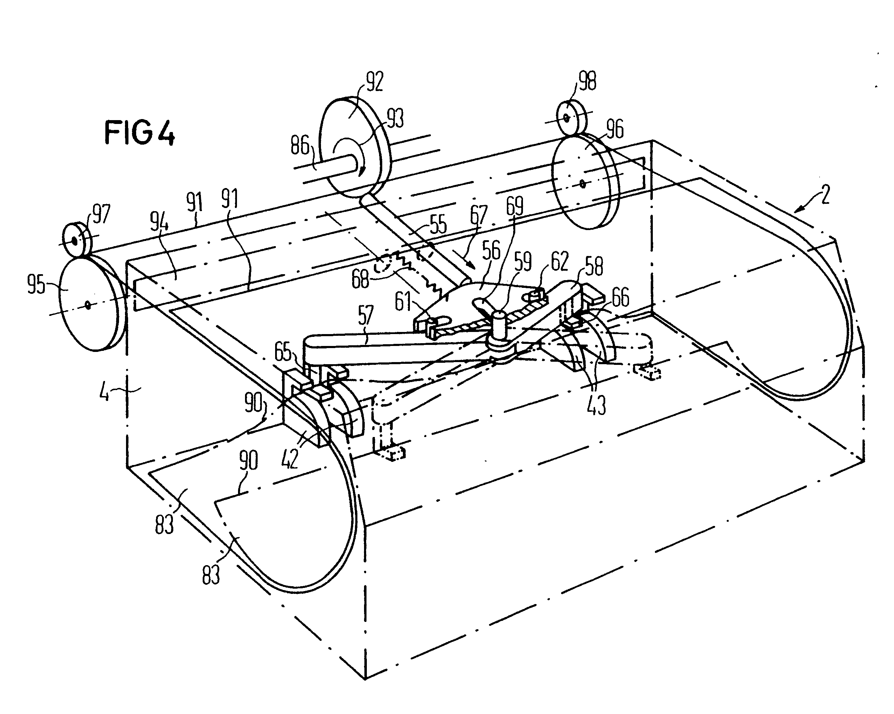

In der FIG 4 ist eine mit der in der FIG 1 gezeigten Vereinzelungsvorrichtung für Röntgenfilmblätter wechselweise arbeitende Entnahmevorrichtung für dieselben gezeigt. Die erwähnten Vorrichtungen sind in dem selben Röntgenfilmmagazin angeordnet. Wegen der Veranschaulichkeit werden die Vorrichtungen getrennt voneinander beschrieben.

Die Entnahmevorrichtung weist eine Stange (55) auf, an deren einem Ende ein Schieber (56) für zwei Schwenkarme (57,58) angeschlossen ist. Zur Verdeutlichung des Aufbaus der Schwenkarme (57,58) ist der Schieber (56) teilweise gebrochen dargestellt. Die Schwenkarme (57,58) sind um eine im Raum fest und zur Bodenplatte (60) senkrecht liegende Welle (59) drehbar gelagert. Jeder Schwenkarm (57,58) weist einen nach oben ragenden Zapfen (61,62) auf, der jeweils in einer Ausnehmung (63,64) des Schiebers liegt. An dem freien Ende jedes Schwenkarmes (57,58) ist ein Haken (65,66) befestigt. In der einen Lage der Schwenkarme (57,58), die als Parklage bezeichnet werden kann, liegen der Haken (65) zwischen den Gleitklötzen (42) und der Haken (66) zwischen den Gleitklötzen (43). Die Höhe der Haken (65,66), von der Bodenplatte (60) gemessen, entspricht der der Spalte (51,52) in den Gleitklötzen (42,43). Beim Verschieben des Schiebers (56) in Richtung des Pfeiles (67) werden die Schwenkarme (57,58) durch Verschieben der Zapfen (61,62) in die strichpunktierte Lage gebracht.

Durch eine Zugfeder (68), die einerseits an dem Schieber (56) und andererseits an der Wandung (4) des Röntgenfilmmagazines (2) befestigt ist, kehrt der Schieber (56) mit den Schwenkarmen (57,58) in seine ursprüngliche Lage zurück. Eine Nut (69) ermöglicht, daß der Schieber (56) trotz der starren Welle (59) vor- und rückwärts bewegt werden kann.

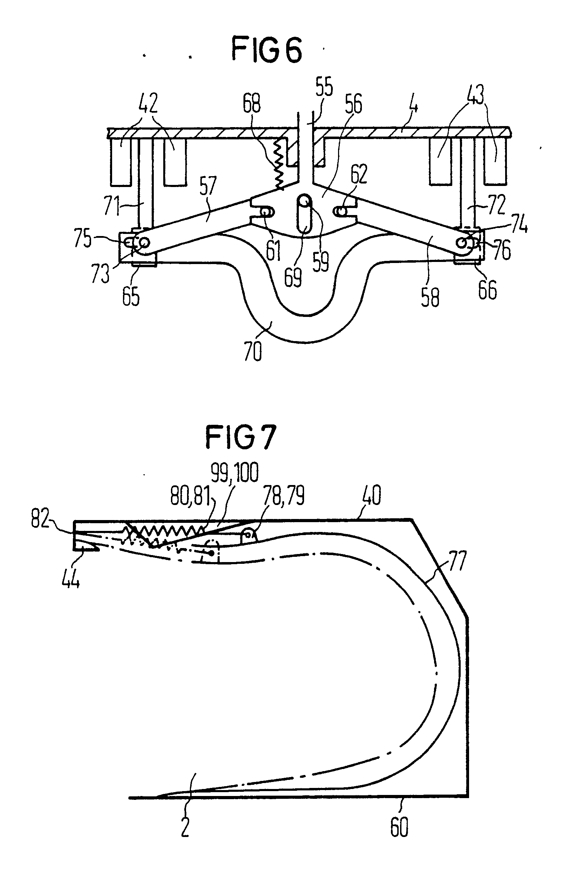

In der FIG 5 ist die Parklage der Entnahmevorrichtung dargestellt. Damit die Schwenkarme (57,58) und dadurch auch die Haken (65,66) parallel und linear verschoben werden, sind die Schwenkarme an ein "omega"-förmiges Lineal (70) angeschlossen, dessen Enden an jeweils einer rohrförmigen Schiene (71,72) verschiebbar angebracht sind. Die Schwenkarme (57,58) sind dabei über Zapfen (73,74), die in Nuten (75,76) des Lineals (70) eingreifen, mit diesem verbunden. Beim Verschieben der Stange (55) bzw. des Schiebers (56) in Richtung des Pfeiles (67) werden die Schwenkarme (57,58) mit dem Lineal (70) entlang der Schienen (71,72) verschoben, bis sie die in der FIG 6 gezeigte Lage einnehmen.

In der FIG 7 ist dargestellt, daß im Röntgenfilmmagazin (2) eine Folie (77) vorgesehen ist, die etwa die Größe eines Röntgenfilmblattes besitzt. Die Folie (77), die eine C-Bogenform beschreibt, ist einerseits an der Bodenplatte (60) und andererseits über Halterungen (78,79) und Zugfedern (80,81) an der Kante (82) am freien Ende des Deckels (40) befestigt.

Die Folie (77) dient dazu, die unterschiedlichen Biegungsradien der C-förmig gelagerten Röntgenfilmblätter, d.h., von einem Stapel zusammengefaßter Filmblätter bis hin zu einem Filmblatt. auszugleichen. Dabei stützt die Folie (77) immer das jeweils unterste Filmblatt ab. Die äußere durchgezogene Linie stellt die Lage der Folie (77) dar, wenn das Röntgenfilmmagazin (2) mit Filmblättern voll geladen ist. Dabei sind die Zugfedern (80,81) weit auseinandergezogen. Wenn bei einer Aufnahmeserie der Röntgenfilmstapel nach und nach dünner wird, ziehen die Zugfedern (80,81) nach, damit immer das unterste Filmblatt des Stapels durch die Folie (77) abgestützt wird. Als Führung für die Halterungen (78,79) der Folie (77) dienen zwei auf jeder Seite des Haltekeils (44) und mit dem Deckel (40) verbundene keilförmige Teile (99,100). Die strichpunktierte Darstellung soll die Lage der Folie (77) bzw. die Lage der Zugfedern (80,81) zeigen, wenn ein einziges Filmblatt übrig ist.

Bevor das Röntgenfilmmagazin (2) mit einem Stapel von Röntgenfilmblättern geladen wird - in den Figuren wird lediglich ein Filmblatt (83) gezeigt - werden zunächst die Zahnräder (19,20), wie es in FIG 2 gezeigt ist, in die obere Lage geschwenkt und in dieser Lage arretiert. Der Filmstapel wird zunächst zwischen der Bodenplatte (60) und den Zahnrädern (19,20) bis zum Vereinzelungsteil (41) geführt. Die vordere Kante des Filmstapels wird danach derart zwischen die Gleitflächen (49) und (50) geschoben, daß das Gleitstück (48), wie es in der FIG 3 dargestellt ist, heruntergedrückt wird. Die vordere Kante des Filmstapels erreicht nun eine Endplatte (84). Der Filmstapel wird auf die Folie (77) gelegt und die der vorderen Kante (90) gegenüberliegende Kante (91) des Filmblattes (83) wird zwischen den Haltekeil (44) und den Deckel (40) hineingeschoben. Der Deckel (40) wird geschlossen, wobei die Stifte (38,39) heruntergedrückt werden, so daß die Zahnräder (19,20) aus ihren oberen Lagen ausrasten und sich gegen die Oberfläche des obersten Filmblattes (83) des Filmstapels legen (FIG 2). Dadurch, daß die Transporträder (19,20) durch die Zugfedern (27,28) federbelastet sind, wird eine Kraft in Richtung auf den Stapel auf diese ausgeubt.

Die Vereinzelungsvorrichtung wird über das in der FIG 1 dargestellte parallelogrammähnliche Gelenksystem (6,7,bis 14) mittels einer in der Aufnahmeeinheit (3) des Röntgenfilmwechslers (1) angeordneten Exzenterscheibe (85) gesteuert. Dies erfolgt, indem die Exzenterscheibe (85) die Stange (5) in deren axialer Richtung verschiebt. In der in der FIG 1 gezeigten strichpunktierten Lage der Exzenterscheibe (85) steuert die Stange (5) über den Verbindungsarm (7), die Welle (6), den weiteren Verbindungsarm (9,10), die Stangen (11,12), die Hebelarme (13,14) und die Rollen (15, 16) derart, daß sie die Oberfläche des Filmblattes (83) nicht berühren, wie es die ebenfalls strichpunktierte Lage dieser Rollen zeigt. Beim Drehen der Exzenterscheibe (85) um deren Achse (86) in Richtung des Pfeiles (87) wird die Stange (5) in Richtung des Pfeiles (88) verschoben und beeinflußt das erwähnte Gelenksystem (6,7,9 bis 14) derart, daß die Rollen (15,16) um die Wellen (17,18) in Richtung der Pfeile (89) geschwenkt werden. Gleichzeitig werden die Zahnräder (19, 20) durch die beschriebene Schwenkung der Rollen (15,16) in dieselbe Richtung gedreht.

Die Zahnräder (19,20) greifen das oberste Filmblatt (83), das damit in den Spalt (45) des Vereinzelungsteiles (41) hineintransportiert wird. Ein unter dem Filmblatt (83) liegendes, hier nicht dargestelltes Filmblatt eines Filmstapels, das wegen Friktion eventuell mittransportiert wird, bleibt am Ende der Strecke (46) des Spaltes (45), wie in der FIG 3 beschrieben, stehen. Die Zahnräder (19,20) werden solange um die Achsen (17,18) gedreht, bis das Filmblatt (83) das Ende der Strecke (47) des Spaltes (45) erreicht hat. Das Filmblatt (83), das nunmehr von dem Filmstapel getrennt ist, gleitet gleichzeitig auf den Gleitflächen (53,54) der Gleitklötze (42,43) in deren Spalt (51,52) hinein. Dadurch, daß die Spalte (51,52) der Gleitklötze (42,43) höher angebracht sind als die Spalte (45) des Vereinzelungsteiles (41), erhält die hier eingeschobene Kante (90) des Filmblattes (83) eine in der FIG 1 strichpunktierte gezeigte Wellenform.

Durch den Transport des Filmblattes (83) in die beschriebene Richtung rastet dessen gegenüberliegende Kante (91) aus dem Griff des Haltekeils (44) aus. In der zuletzt erwähnten Position der Zahnräder (19,20) haben die Rollen (15,16), die in der FIG 1 gezeigte Lage erreicht, in der sie die Zahnrader (19,20) etwas von ihren Anliegeflächen abheben.

Die in der FIG 4 gezeigte Entnahmevorrichtung wird mittels einer weiteren, auf derselben Achse (86) wie die Exzenterscheibe (85) angebrachten Exzenterscheibe (92) angetrieben. In der in dieser FIG dargestellten Parklage der Entnahmevorrichtung umgreifen die Haken (65,66) der Schwenkarme (57,58) die Kante (90) des Filmblattes (83). Durch Drehen der Exzenterscheibe (92) um die Achse (86) in Richtung des Pfeiles (93) wird die Stange (55) bzw. der Schieber (56), wie beschrieben, in Richtung des Pfeiles (67) verschoben. Der Schieber (56) betätigt über die Zapfen (61,62) die Schwenkarme (57,58) und gleichzeitig die Haken (65,66) derart, daß das Filmblatt (83) bis zu deren strichpunktierter Lage transportiert wird.

Die Rollen (15,16), die auf der Oberfläche des Filmblattes (83) aufliegen, rollen beim Filmtransport mit. Das Filmblatt (83) wird zunächst durch einen in der Wandung (4) des Röntgenfilmmagazines (2) vorhandenen Schlitz (94) hindurchtransportiert und erreicht eine in der Aufnahmeeinheit (3) vorhandene Transporteinrichtung, bestehend aus Transportrollen (95,96) und Andruckrollen (97,98), die das Filmblatt (83) in die Aufnahmeeinheit weitertransportieren.

Durch Weiterdrehen der Exzenterscheibe (92) gehen die Schwenkarme (57,58) bzw. die Haken (65,66) in ihre Parklage zurück. Die Vereinzelungsvorrichtung wird durch Drehen der Exzenterscheibe (85) so beeinflußt, daß die Rollen (15,16) über das prallelogrammähnliche Gelenksystem (6,7,9 bis 14) wieder in die ursprüngliche Lage geschwenkt werden. Jedes Zahnrad (19,20) ist mit einer Freilaufnabe (101) versehen. Dadurch drehen sich die Zahnräder (19,20) lediglich in der bereits beschriebenen Richtung. Beim Zurückschwenken der Rollen (15, 16) in die ursprüngliche Lage drehen sich die Zahnräder (19,20) nicht mit, sondern legen sich wieder auf die Oberfläche des nächsten obersten Filmblattes des Filmstapels.

Der beschriebene Verlauf, d.h., das wechselweise Arbeiten zwischen der Vereinzelungs- und der Entnahmevorrichtung wiederholt sich bis zum letzten im Röntgenfilmmagazin geladenen Röntgenfilmblatt oder bis der Verlauf durch den Operateur unterbrochen wird.

Bezugszeichenliste

| | |
|---|---|
| 1 | Röntgenfilmwechsler |
| 2 | Röntgenfilmmagazin |
| 3 | Aufnahmeeinheit |
| 4,25,26 | Wandung |
| 5,11,12,55 | Stange; Gelenksystem |
| 6,31,32,59 | Welle; Gelenksystem |
| 7,9,10 | Verbindungsarm; Gelenksystem |
| 8,27,28,68,80,81 | Zugfeder |
| 13,14 | Hebelarm; Gelenksystem |
| 15,16 | Rolle |
| 17,18,23,24,31,32,86 | Achse |
| 19,20 | Zahnrad; Transportrad |
| 21,22 | Hebel |
| 29,30 | Schloßblech |
| 33,34 | Anschlag |
| 35,36 | Platte |
| 37,67,87,88,89,93 | Pfeil |
| 38,39 | Stift |
| 40 | Deckel |
| 41 | Vereinzelungsteil |
| 42,43 | Gleitklotz |
| 44 | Haltekeil |
| 45,51,52 | Spalt |
| 46,47 | Strecke |
| 48 | Gleitstück |
| 49,50,53,54 | Gleitfläche |
| 56 | Schieber |
| 57,58 | Schwenkarme |
| 60 | Bodenplatte |
| 61,62,73,74 | Zapfen |
| 63,64 | Ausnehmung |
| 65,66 | Haken |
| 69,75,76 | Nut |
| 70 | Lineal |
| 71,72 | Schiene |
| 77 | Folie |

Bezugszeichenliste

| | |
|---|---|
| 78,79 | Halterung |
| 82,90,91 | Kante |
| 83 | Filmblatt |
| 84 | Endplatte |
| 85,92 | Exzenterscheibe |
| 94 | Schlitz |
| 95,96 | Transportrollen |
| 97,98 | Andruckrollen |
| 99,100 | Keilförmiger Teil |
| 101 | Freilaufnabe |

**Ansprüche**

1. Vorrichtung zum Trennen von einzelnen, zu einem Stapel zusammengefaßten Blättern, insbesondere Röntgenfilmblättern bei Röntgeneinrichtungen, mit mindestens einem Transportrad, das um eine Achse entgegen der Auslaufrichtung der Blätter antreibbar ist, wobei die Achse annähernd senkrecht zum Stapel verschiebbar gelagert ist, und das auf der Oberfläche eines obersten Blattes des Stapels auflegbar ist, **dadurch gekennzeichnet, daß** das Transportrad (19,20) nach einer Drehung um einen Winkel α, der einer vorgebbaren Transportstrecke des Blattes (83) entspricht, von diesem abgehoben wird.

2. Vorrichtung nach Anspruch 1, **dadurch gekennzeichnet, daß** zum Abheben eine Rolle (15,16) vorgesehen ist, die an einem Hebelarm (13,14) befestigt ist, der über die gleiche Achse (17,18) schwenkbar ist, um die das Transportrad (19,20) gedreht wird, daß die Schwenkung des Hebelarmes (13,14) und die Drehung des Transportrades (19,20) um die Achse (17,18) so aufeinander abgestimmt sind, daß nach der Drehung des Transportrades (19,20) um den Winkel α die Rolle (15,16) auf der Oberfläche des obersten Blattes (83) des Stapels anliegt und daß der Abstand von der Achse (17,18) bis zum Ende der Rolle (15,16) größer ist als der Radius des Transportrades (19,20).

3. Vorrichtung nach Anspruch 1 oder 2, **dadurch gekennzeichnet, daß** die Achse (17,18) des Transportrades (19,20) an einem Hebel (21,22) gelagert ist, der um eine weitere Achse (23,24) schwenkbar ist.

4. Vorrichtung nach einem der Ansprüche 1 bis 3, **dadurch gekennzeichnet, daß** das Transportrad (19,20) in abgehobener Lage arretierbar ist.

5. Vorrichtung nach einem der Ansprüche 1 bis 4, **dadurch gekennzeichnet, daß** das Transportrad (19,20) derart federbelastet ist, daß eine Kraft in Richtung auf den Stapel auf dieses ausgeübt wird.

6. Vorrichtung nach einem der Ansprüche 1 bis 5, **dadurch gekennzeichnet, daß** das Transportrad (19,20) und die Rolle (15,16) mittels eines parallelogrammarmähnlichen Gelenksystem (6,7,9 bis 14) antreibbar sind.

7. Vorrichtung nach Anspruch 6, **dadurch gekennziechnet, daß** der Bewegungsablauf des Gelenksystems (6,7,9 bis 14) mittels einer Exzenterscheibe (85) gesteuert wird.

8. Vorrichtung nach einem der Ansprüche 1 bis 7, **dadurch gekennzeichnet, daß** als Transportrad (19,20) ein Zahnrad vorgesehen ist.

7

FIG1

# FIG 2

# FIG 3

# FIG 5

FIG 4

EP 0 402 491 A1

## FIG 6

## FIG 7

Europäisches
Patentamt

**EUROPÄISCHER RECHERCHENBERICHT**

Nummer der Anmeldung

EP 89 11 0599

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-1 397 379 (XEROX CORP.) <br> * Figuren; Seite 3, Zeilen 26-63 * | 1 | B 65 H 3/06 <br> B 65 H 3/24 <br> B 65 H 1/00 <br> G 03 B 42/04 |
| A | | 6 | |
| A,D | US-A-4 541 625 (N. YUGUCHI et al.) <br> * Spalte 1, Zeile 53 - Spalte 2, Zeile 4; Figuren; Spalte 4, Zeilen 7-65; Spalte 7, Zeile 18 - Spalte 8, Zeile 18 * | 1,4,5 | |
| A | FR-A- 745 010 (A.-A. ROY) <br> * Figuren * | 1,8 | |
| | | | **RECHERCHIERTE SACHGEBIETE (Int. Cl.5)** <br><br> B 65 H 1/00 <br> B 65 H 3/00 <br> G 03 B 42/00 |

Der vorliegende Recherchenbericht wurde für alle Patentansprüche erstellt

| Recherchenort | Abschlußdatum der Recherche | Prüfer |
|---|---|---|
| BERLIN | 10-08-1989 | FUCHS H.X.J. |